# EUROPEAN PATENT APPLICATION

(11) **EP 4 790 467 A1**
(43) Date of publication of application: **12.08.2026**
(21) Application number: 24874663.8
(22) Date of filing: 03.10.2024
(51) Int. Cl.: G02B 6/40, G02B 6/38

(54) **OPTICAL CONNECTOR, OPTICAL CONNECTION ASSEMBLY, OPTICAL WAVEGUIDE MEMBER, AND METHOD FOR MANUFACTURING OPTICAL CONNECTOR**

(30) Priority: 06.10.2023 JP 2023174442
(71) Applicant: Sumitomo Electric Industries, Ltd., Osaka-shi, Osaka 541-0041 (JP)
(72) Inventor: MORISHIMA, Tetsu, Osaka-shi, Osaka 541-0041 (JP)
(74) Representative: TBK
(86) International application number: PCT/JP2024/035357
(87) International publication number: WO 2025/075063

(57) **Abstract**

An optical connector according to the present disclosure comprises an optical connector ferrule that includes a ferrule end surface and at least one through-hole, and an optical waveguide member that includes a distal-end surface and a plurality of refractive index variation regions and is held by the optical connector ferrule in a state of being inserted into the through-hole. The plurality of refractive index variation regions include at least one core. The ferrule end surface and the distal-end surface are inclined parallel to an inclined surface inclined with respect to a surface perpendicular to the center axis of the optical waveguide member in a cross section including the center axis. In the distal-end surface, when a straight line passing through the center of a first refractive index variation region, parallel to the inclined surface, and parallel to the cross section including the center axis is drawn, the center of a second refractive index variation region is disposed at a position offset from the straight line.

## Description

### TECHNICAL FIELD

The present disclosure relates to an optical connector, an optical connection assembly, an optical waveguide member, and a method of manufacturing an optical connector. This application claims priority based on Japanese Patent Application No. 2023-174442 filed on October 6, 2023, and the entire contents of which are incorporated herein by reference.

### BACKGROUND ART

For example, Patent Literature 1 discloses an optical connector for connecting multi-core optical fibers to each other. As a method of connecting multi-core optical fibers to each other, a physical contact (PC) method is generally known. In the PC method, a fiber end face of an optical connector is physically brought into contact with a fiber end face of a connection counterpart optical connector and pressed, thereby optically coupling the optical fibers to each other.

### CITATION LIST

### PATENT LITERATURE

Patent literature 1: Japanese Unexamined Patent Application Publication No. H9-68627

### SUMMARY OF INVENTION

An optical connector of the present disclosure includes an optical connector ferrule including a ferrule end surface and at least one through hole extending from the ferrule end surface, and an optical waveguide member including a distal end surface exposed at the ferrule end surface, a plurality of refractive index changed regions exposed at the distal end surface, and a cladding surrounding the plurality of refractive index changed regions, the optical waveguide member being held by the optical connector ferrule in a state of being inserted into the at least one through hole. Each of the plurality of refractive index changed regions has a refractive index different from a refractive index of the cladding. The plurality of refractive index changed regions include a first refractive index changed region and a second refractive index changed region, at least one of the first refractive index changed region or the second refractive index changed region being a core. In a cross section including a center axis of the optical waveguide member, the ferrule end surface and the distal end surface are inclined in parallel to an inclined surface inclined with respect to a plane perpendicular to the center axis. On the distal end surface, a center of the second refractive index changed region is disposed at a position shifted from a straight line when the straight line that passes through a center of the first refractive index changed region, is parallel to the inclined surface, and is parallel to the cross section is drawn.

### BRIEF DESCRIPTION OF THE DRAWINGS

[FIG. 1] FIG. 1 is a cross-sectional view showing an optical connection assembly according to an embodiment.
[FIG. 2] FIG. 2 is a perspective view showing an optical connector included in the optical connection assembly of FIG. 1.
[FIG. 3] FIG. 3 is a front view showing the optical connector of FIG. 2.
[FIG. 4] FIG. 4 is a flowchart showing an example of a manufacturing process of an optical connector.
[FIG. 5] FIG. 5 is a cross-sectional view for explaining effects of the present disclosure.
[FIG. 6] FIG. 6 is a front view showing an optical connector according to a first modification.
[FIG. 7] FIG. 7 is a front view showing an optical connector according to a second modification.
[FIG. 8] FIG. 8 is a front view showing an optical connector according to a comparative example.
[FIG. 9] FIG. 9 is a cross-sectional view for explaining an issue of the optical connector of FIG. 8.

### DETAILED DESCRIPTION

### [Problems to be Solved by Present Disclosure]

When manufacturing the optical connector as described above, a ferrule end surface is polished in a state in which an optical fiber is mounted in a ferrule, and as a result, the ferrule end surface and a fiber end face may be inclined at a predetermined angle with respect to a plane perpendicular to an axial direction of the optical fiber. When the fiber end face is inclined, an optical signal propagated through a certain core of the optical fiber may be reflected at the fiber end face and coupled to another core of the optical fiber as reflected return light. Such reflected return light may cause deterioration of an optical signal propagating through another core. As a result, quality of optical transmission of the optical connector may deteriorate.

The present disclosure provides an optical connector, an optical connection assembly, an optical waveguide member, and a method of manufacturing an optical connector that can reduce deterioration in quality of optical transmission.

### [Advantageous Effects of Present Disclosure]

According to an optical connector, an optical connection assembly, an optical waveguide member, and a method of manufacturing an optical connector of the present disclosure, it is possible to reduce deterioration in quality of optical transmission.

### [Description of Embodiments of Present Disclosure]

First, the contents of the embodiments of the present disclosure will be listed and described.
(1) An optical connector of the present disclosure includes an optical connector ferrule including a ferrule end surface and at least one through hole extending from the ferrule end surface, and an optical waveguide member including a distal end surface exposed at the ferrule end surface, a plurality of refractive index changed regions exposed at the distal end surface, and a cladding surrounding the plurality of refractive index changed regions, the optical waveguide member being held by the optical connector ferrule in a state of being inserted into the at least one through hole. Each of the plurality of refractive index changed regions has a refractive index different from a refractive index of the cladding. The plurality of refractive index changed regions include a first refractive index changed region and a second refractive index changed region, at least one of the first refractive index changed region or the second refractive index changed region being a core. In a cross section including a center axis of the optical waveguide member, the ferrule end surface and the distal end surface are inclined in parallel to an inclined surface inclined with respect to a plane perpendicular to the center axis. On the distal end surface, a center of the second refractive index changed region is disposed at a position shifted from a straight line when the straight line that passes through a center of the first refractive index changed region, is parallel to the inclined surface, and is parallel to the cross section is drawn.
   When the optical connector is manufactured, as a result of polishing the ferrule end surface and the distal end surface of the optical waveguide member, the ferrule end surface and the distal end surface of the optical waveguide member may be inclined along (parallel to) an inclined direction (inclined surface) inclined with respect to a direction (plane) perpendicular to the center axis in the cross section including the center axis. In this case, an optical signal propagating through the refractive index changed region of the optical waveguide member is reflected at the distal end surface and travels in a reflection direction as reflected return light. The reflection direction in which the reflected return light travels is along the inclined direction in which the distal end surface is inclined when the distal end surface is viewed along an axial direction in which the center axis extends. Thus, if, on the distal end surface, the first refractive index changed region and the second refractive index changed region are disposed so as to be arranged in the inclined direction, for example, the second refractive index changed region is present at the destination of the reflected return light, and thus it is assumed that the reflected return light is incident on the second refractive index changed region. Thus, in the optical connector, when the distal end surface is viewed along the axial direction, that is, on the distal end surface, the center of the second refractive index changed region is disposed at a position shifted from an inclined direction line (straight line) when the inclined direction line that passes through the center of the first refractive index changed region and extends along the inclined direction is drawn. That is, on the distal end surface, the first refractive index changed region and the second refractive index changed region are disposed so as not to be arranged on the same line in the inclined direction. Thus, since the second refractive index changed region is not present at the destination of the reflected return light, incidence of the reflected return light on the second refractive index changed region can be reduced. As a result, it is possible to reduce deterioration of the optical signal propagating through the refractive index changed region of the optical waveguide member due to an influence of the reflected return light. Thus, according to the optical connector, it is possible to reduce deterioration in the quality of optical transmission.
(2) In the optical connector according to the above (1), the second refractive index changed region may be disposed at a position closest to the first refractive index changed region on the distal end surface among the plurality of refractive index changed regions. In this manner, in a case where the second refractive index changed region is disposed close to the first refractive index changed region, when the reflected return light is incident on the second refractive index changed region, the reflected return light is likely to have a significant influence on the optical signal propagating through the refractive index changed region, and thus it is assumed that the optical signal is significantly deteriorated. In contrast, in the optical connector described above, incidence of the reflected return light on the second refractive index changed region can be reduced as described above. This makes it possible to more effectively reduce deterioration in the quality of optical transmission of the optical connector.
(3) In the optical connector according to the above (1) or (2), centers of all of the plurality of refractive index changed regions except the first refractive index changed region may be disposed at positions shifted from the straight line. In this case, when an optical signal propagating through the first refractive index changed region is reflected at the distal end surface, incidence of the reflected return light on another refractive index changed region can be reduced, and thus deterioration of the optical signal propagating through the refractive index changed region due to the influence of the reflected return light can be reduced. This makes it possible to more effectively reduce deterioration in the quality of optical transmission of the optical connector.
(4) In the optical connector according to any one of the above (1) to (3), the optical waveguide member may be a multi-core fiber. Each of the first refractive index changed region and the second refractive index changed region may be the core. In this case, since the second refractive index changed region is likely to be disposed at a position close to the first refractive index changed region, when the reflected return light of the optical signal propagating through the first refractive index changed region is incident on the second refractive index changed region, the influence of the reflected return light on the optical signal propagating through the refractive index changed region is likely to be large. In contrast, in the optical connector described above, since the incidence of the reflected return light on the second refractive index changed region can be reduced as described above, the above-described effect can be achieved effectively.
(5) The optical connector according to the above (4), centers of all of the plurality of refractive index changed regions may be disposed at positions shifted from the center axis. If any one of the cores is disposed on the center axis, the core disposed on the center axis (hereinafter referred to as a "center core") is disposed at a position relatively close to a core disposed at a position shifted from the center axis (hereinafter referred to as a "peripheral core"). Thus, for example, when a reflected return light of an optical signal propagating through the center core is incident on the peripheral core, it is assumed that an optical signal propagating through the peripheral core is significantly deteriorated due to the influence of the reflected return light. In the optical connector of the above (5), since all the cores are disposed at positions shifted from the center axis, intervals between the cores can be maintained to some extent. Thus, even if a reflected return light of an optical signal propagating through any one of the core is incident on another core, it is possible to reduce significant deterioration of an optical signal propagating through the core due to the influence of the reflected return light.
(6) In the optical connector according to any one of the above (1) to (3), the optical waveguide member may be a polarization maintaining fiber. When the first refractive index changed region is the core, the second refractive index changed region may be a stress application portion. When the second refractive index changed region is the core, the first refractive index changed region may be the stress application portion. In this case, it is possible to reduce a reflected return light of an optical signal of the core reflected at the distal end surface from being reflected at the stress application portion and returning to the core. This can reduce deterioration of the optical signal propagating through the core due to the influence of the reflected return light.
(7) An optical connection assembly of the present disclosure may include a first optical connector and a second optical connector, each being the optical connector according to any one of the above (1) to (6). The ferrule end surface of the first optical connector may face the ferrule end surface of the second optical connector along the center axis. Since the optical connection assembly includes the first optical connector and the second optical connector, each being any one of the optical connectors described above, the optical connection assembly can effectively achieve the above-described effect of reducing deterioration in the quality of optical transmission.
(8) An optical waveguide member of the present disclosure includes a distal end surface, and a plurality of refractive index changed regions exposed at the distal end surface, and a cladding surrounding the plurality of refractive index changed regions. Each of the plurality of refractive index changed regions has a refractive index different from a refractive index of the cladding. The plurality of refractive index changed regions include a first refractive index changed region and a second refractive index changed region, at least one of the first refractive index changed region or the second refractive index changed region being a core. In a cross section including a center axis extending along the core from a center of the distal end surface, the distal end surface is inclined in parallel to an inclined surface inclined with respect to a plane perpendicular to the center axis. On the distal end surface, a center of the second refractive index changed region is disposed at a position shifted from a straight line when the straight line that passes through a center of the first refractive index changed region, is parallel to the inclined surface, and is parallel to the cross section including the center axis is drawn. According to this optical waveguide member, effects similar to those of the above-described optical connector can be obtained.
(9) A method of manufacturing an optical connector of the present disclosure includes: preparing an optical connector ferrule including a ferrule end surface and at least one through hole extending from the ferrule end surface, and preparing an optical waveguide member including a distal end surface, a plurality of refractive index changed regions exposed at the distal end surface, and a cladding surrounding the plurality of refractive index changed regions; inserting the optical waveguide member into the at least one through hole such that the distal end surface is exposed from the ferrule end surface; adjusting a rotational position of the optical waveguide member around a center axis of the optical waveguide member; and after the rotational position of the optical waveguide member is determined, polishing the ferrule end surface and the distal end surface such that the ferrule end surface and the distal end surface are parallel to an inclined surface inclined with respect to a plane perpendicular to the center axis of the optical waveguide member in a cross section including the center axis. Each of the plurality of refractive index changed regions has a refractive index different from a refractive index of the cladding. The plurality of refractive index changed regions include a first refractive index changed region and a second refractive index changed region, at least one of the first refractive index changed region or the second refractive index changed region being a core. In the adjusting the rotational position of the optical waveguide member, on the distal end surface, the rotational position of the optical waveguide member around the center axis is determined such that a center of the second refractive index changed region is disposed at a position shifted from a straight line when the straight line that passes through a center of the first refractive index changed region, is parallel to the inclined surface, and is parallel to the cross section including the center axis is drawn.

In the method of manufacturing the optical connector, as a result of polishing the ferrule end surface, the ferrule end surface and the distal end surface of the optical waveguide member may be inclined along (parallel to) the inclined direction (inclined surface) inclined from the direction perpendicular to the center axis in the cross section including the center axis. In this case, the optical signal propagating through the refractive index changed region of the optical waveguide member is reflected at the distal end surface and travels in the reflection direction as reflected return light. The reflection direction in which the reflected return light travels is along the inclined direction in which the distal end surface is inclined when the distal end surface is viewed along the axial direction. Thus, if, on the distal end surface, the first refractive index changed region and the second refractive index changed region are disposed so as to be arranged in the inclined direction, for example, it is assumed that the optical signal propagating through the first refractive index changed region is reflected at the distal end surface and enters the second refractive index changed region as reflected return light. Thus, in the above-described method of manufacturing the optical connector, at the time of adjusting the rotational position of the optical waveguide member, when the distal end surface is viewed along the axial direction, that is, on the distal end surface, the rotational position of the optical waveguide member is determined such that the center of the second refractive index changed region is disposed at a position shifted from an inclined direction line (straight line), when the inclined direction line that passes through the center of the first refractive index changed region and extends along the inclined direction is drawn. That is, the rotational position of the optical waveguide member is determined such that, on the distal end surface, the first refractive index changed region and the second refractive index changed region are disposed so as not to be arranged in the inclined direction. Thus, since the second refractive index changed region is not present at the destination of the reflected return light, incidence of the reflected return light on the second refractive index changed region can be reduced. As a result, it is possible to reduce deterioration of the optical signal propagating through the refractive index changed region of the optical waveguide member due to the influence of the reflected return light. Thus, according to the method of manufacturing the optical connector, it is possible to reduce deterioration in the quality of optical transmission.

### [Details of Embodiments of Present Disclosure]

Specific examples of an optical connector, an optical connection assembly, an optical waveguide member and a method of manufacturing an optical connector of the present disclosure will be described in detail below with reference to the accompanying drawings. The present invention is not limited to these examples, but is defined by the scope of the claims, and is intended to include all modifications within the meaning and scope equivalent to the scope of the claims. In the description of the drawings, the same elements are denoted by the same reference numerals, and redundant description will be omitted as appropriate.

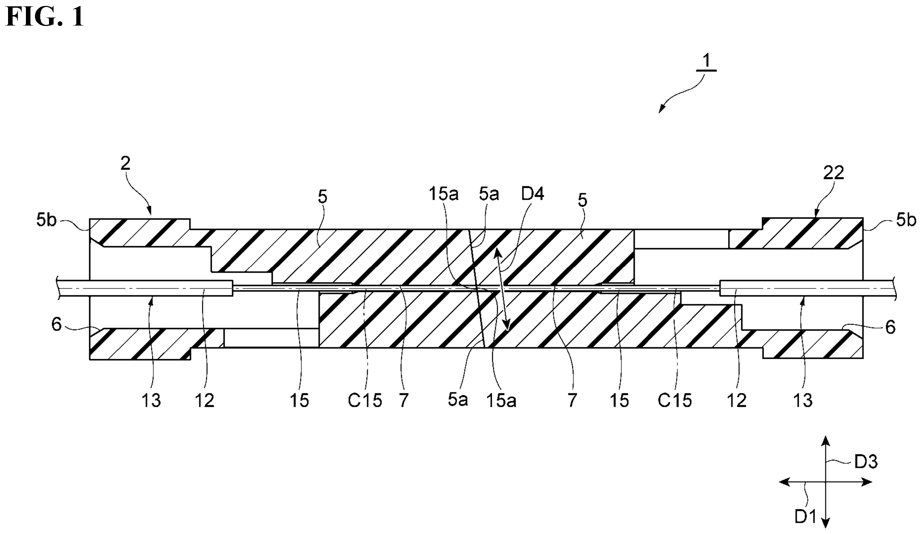

FIG. 1 is a cross-sectional view showing an optical connection assembly 1 according to an embodiment. As shown in FIG. 1, the optical connection assembly 1 includes, for example, an optical connector 2 (first optical connector) and a connection counterpart optical connector 22 (second optical connector). The optical connector 2 and the optical connector 22 have, for example, the same shape as each other. The optical connector 2 and the optical connector 22 face each other along an axial direction D1, for example, in a state where the optical connector 22 is vertically inverted with respect to the optical connector 2. The axial direction D1 is a direction in which a center axis C15 of an optical fiber 15 described later extends, and is a connection direction of the optical connector 2 and the optical connector 22. The optical connector 2 and the optical connector 22 are butted against each other and are PC-connected along the axial direction D1. Thus, the optical connector 2 and the optical connector 22 are optically coupled to each other.

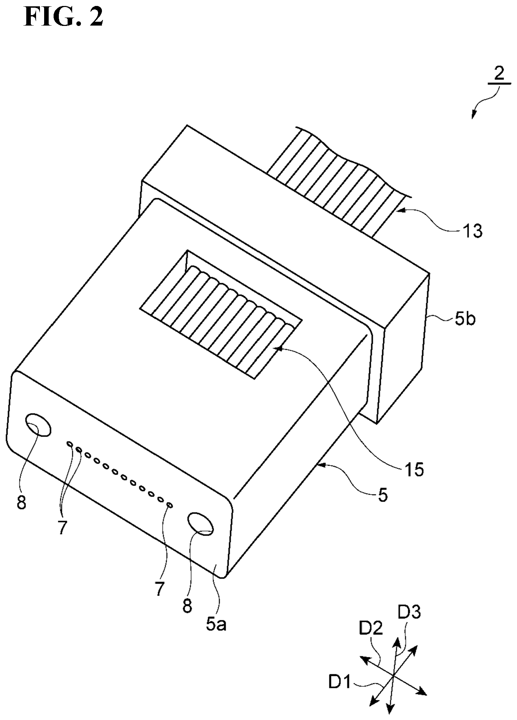

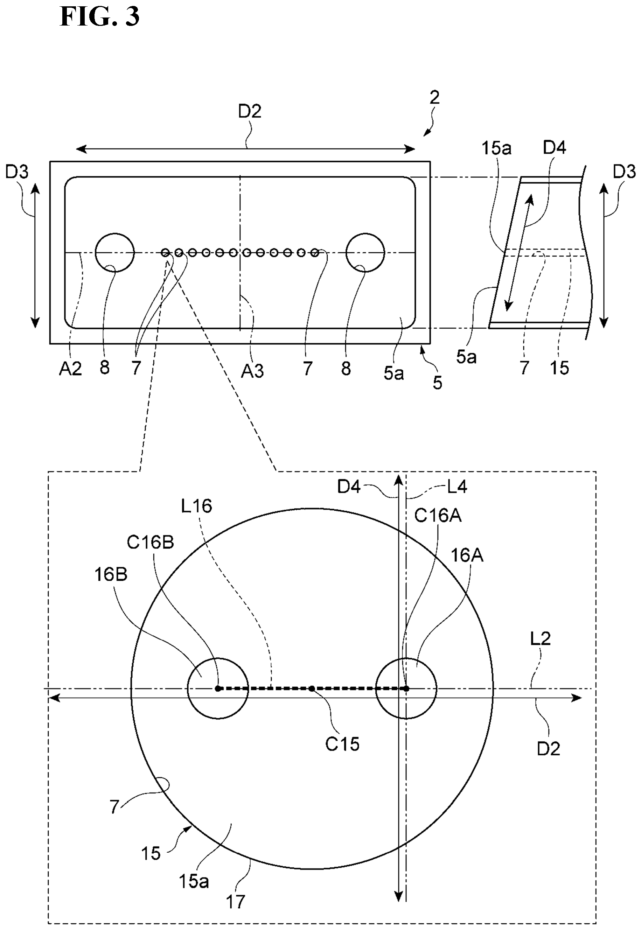

FIG. 2 is a perspective view showing the optical connector 2. FIG. 3 is a front view showing the optical connector 2. As shown in FIG. 2, the optical connector 2 includes, for example, a ferrule 5 (optical connector ferrule) and a plurality of optical fibers 15 (optical waveguide members). The ferrule 5 has a substantially rectangular parallelepiped shape in external appearance and is formed of, for example, a resin. The ferrule 5 is, for example, an MT ferrule. The ferrule 5 includes, for example, a ferrule end surface 5a provided at a first end along the axial direction D1 and a rear end surface 5b provided at a second end along the axial direction D1. In the optical connection assembly 1 of FIG. 1, the ferrule end surface 5a faces the ferrule end surface 5a of the connection counterpart optical connector 22 along the axial direction D1. The ferrule end surface 5a may be in contact with a connection counterpart ferrule end surface 5a or may be separated from the connection counterpart ferrule end surface 5a. The rear end surface 5b is formed with an introduction opening 6 (see FIG. 1) for receiving the plurality of optical fibers 15.

As shown in FIG. 3, the ferrule end surface 5a viewed along the axial direction D1 has a shape having a major axis (first center line) A2 and a minor axis (second center line) A3, for example, when an ellipse inscribed in an outer shape of the ferrule end surface 5a is defined. The first center line A2 is a line segment (symmetric axis) passing through the center of the ferrule end surface 5a and extending along a longitudinal direction D2 of the ferrule end surface 5a. The second center line A3 is a line segment (symmetric axis) passing through the center of the ferrule end surface 5a and extending along a lateral direction D3 of the ferrule end surface 5a. A length of the first center line A2 is longer than a length of the second center line A3. Thus, a length of the ferrule end surface 5a along the longitudinal direction D2 in which the first center line A2 extends is longer than a length of the ferrule end surface 5a along the lateral direction D3 in which the second center line A3 extends. For example, the ferrule end surface 5a has a rectangular shape extending long along the longitudinal direction D2. A long side of the ferrule end surface 5a extends along the longitudinal direction D2, and a short side of the ferrule end surface 5a extends along the lateral direction D3. The longitudinal direction D2 and the lateral direction D3 are directions intersecting (for example, orthogonal to) the axial direction D1. The longitudinal direction D2 intersects (for example, is orthogonal to) the lateral direction D3.

The ferrule 5 further includes a plurality of through holes 7 and a pair of guiding holes 8. As shown in FIG. 1, each of the optical fibers 15 is inserted into a respective one of the through holes 7. Each of the through holes 7 is an optical fiber holding hole for holding the inserted optical fiber 15. The plurality of through holes 7 extend from the ferrule end surface 5a toward the introduction opening 6 along the axial direction D1. A front end of each through hole 7 is opened at the ferrule end surface 5a. A direction in which a center axis of each through hole 7 extends coincides with the axial direction D1. The openings of the through holes 7 are arranged in a row along the longitudinal direction D2 on the ferrule end surface 5a.

As shown in FIG. 2, the guiding holes 8 are arranged along the longitudinal direction D2, and are formed at a pair of positions sandwiching the plurality of through holes 7 (in other words, at both ends of the row of the through holes 7). The guiding holes 8 penetrate the ferrule 5 along the axial direction D1. A pair of guiding pins are inserted into the guiding holes 8. The pair of guiding pins are inserted into a pair of guiding holes of the connection counterpart optical connector 22 (see FIG. 1) in a state of being inserted into the guiding holes 8. As a result, a relative position between the optical connector 2 and the connection counterpart optical connector 22 is fixed.

The plurality of optical fibers 15 extend along the axial direction D1 and are arranged along the longitudinal direction D2, corresponding to the through holes 7 of the ferrule 5. In one example, twelve optical fibers 15 are arranged in a row along the longitudinal direction D2. Each of the optical fibers 15 is inserted into a respective one of the through holes 7 along the axial direction D1. The arrangement and the number of the plurality of optical fibers 15 can be changed as appropriate according to required specifications. For example, two fiber rows in each of which twelve optical fibers 15 are arranged in the longitudinal direction D2 may be arranged along the lateral direction D3. The number of the optical fibers 15 is not limited to twelve, and may be other numbers.

As shown in FIG. 1, the optical fibers 15 are covered with an outer sheath 12 made of resin, thereby forming an optical fiber core wire 13. The outer sheath 12 is removed from the optical fiber core wire 13 from the middle to the tip end along the axial direction D1, and the optical fiber 15 is exposed from the outer sheath 12. Each of the optical fibers 15 is fixed to the ferrule 5 with an adhesive injected into the ferrule 5 in a state in which each of the optical fibers 15 is inserted into a respective one of the through holes 7 of the ferrule 5. In a state in which each of the optical fibers 15 is inserted into a respective one of the through holes 7, a fiber end face 15a (distal end surface) of each of the optical fibers 15 is exposed from an opening of a respective one of the through holes 7 formed in the ferrule end surface 5a.

In a state in which each of the optical fibers 15 is inserted into a respective one of the through holes 7 of the ferrule 5, the ferrule end surface 5a is subjected to angled polishing. In the angled polishing, the polishing is performed on the ferrule end surface 5a such that the ferrule end surface 5a is inclined (for example, 8 degrees) with respect to a plane perpendicular to the axial direction D1. As a result, the ferrule end surface 5a is inclined with respect to the plane perpendicular to the axial direction D1. As shown in FIG. 1, the ferrule end surface 5a is inclined from a direction perpendicular to the center axis C15 in a cross section including the center axis C15. More specifically, the ferrule end surface 5a extends along an inclined direction D4 inclined with respect to the lateral direction D3 perpendicular to the axial direction D1 in a cross section passing through the center axis C15 and extending along the lateral direction D3 and the axial direction D1. The inclined direction D4 coincides with the lateral direction D3 when the fiber end face 15a is viewed along the axial direction D1 (see FIG. 3). The lateral direction D3 represents the plane perpendicular to the axial direction D1 in the cross section including the center axis C15. The inclined direction D4 represents an inclined surface inclined with respect to the plane perpendicular to the axial direction D1 in the cross section including the center axis C15.

With this configuration, the fiber end face 15a of each of the optical fibers 15 polished simultaneously with the ferrule end surface 5a is also inclined with respect to the plane perpendicular to the axial direction D1, similarly to the ferrule end surface 5a. That is, each of the fiber end faces 15a extends along the inclined direction D4 inclined with respect to the lateral direction D3 perpendicular to the axial direction D1 in the cross section passing through the center axis C15 and extending along the lateral direction D3 and the axial direction D1. Each of the fiber end faces 15a may protrude from the ferrule end surface 5a along the axial direction D1, or may be a surface aligned with the ferrule end surface 5a without a step.

As shown in FIG. 3, each optical fiber 15 is a multi-core fiber including, for example, two (a plurality of) cores 16A, 16B (refractive index changed regions) and a cladding 17 surrounding the cores 16A, 16B. The cores 16A, 16B are refractive index changed regions each having a refractive index higher than a refractive index of the cladding. The cores 16A, 16B are exposed from the fiber end face 15a and are disposed adjacent to each other in the fiber end face 15a. The number of cores included in the optical fiber 15 is not limited to two, and may be other numbers such as four, six, or eight or more.

In the embodiment, a case where the optical fiber 15 does not have other cores other than two cores 16A, 16B is shown. Thus, it can be said that, on the fiber end face 15a, the cores 16A, 16B are cores disposed at positions closest to each other among the cores included in the optical fiber 15. The term closest means that a distance between the centers of the two cores is the shortest when the fiber end face 15a is viewed along the axial direction D1. Hereinafter, for convenience, the core 16A is regarded as a "first refractive index changed region" and a core 16B is regarded as a "second refractive index changed region". Conversely, the core 16B may be regarded as the "first refractive index changed region", and the core 16A may be regarded as the "second refractive index changed region".

The core 16A (first refractive index changed region) and the core 16B (second refractive index changed region) are disposed, for example, at positions shifted from the center axis C15 of the optical fiber 15 when the fiber end face 15a is viewed along the axial direction D1. The cores 16A, 16B are disposed at a pair of positions sandwiching the center axis C15 in the fiber end face 15a, for example. A distance between the center axis C15 and a center C16A of the core 16A is equal to a distance between the center axis C15 and a center C16B of the core 16B. Thus, the cores 16A, 16B are arranged line-symmetrically with respect to the center axis C15. It can also be said that the cores 16A, 16B are arranged point-symmetrically with respect to the center axis C15. In the example shown in FIG. 3, the optical fiber 15 does not have a core disposed on the center axis C15. That is, the centers C16A, C16B of all the cores 16A, 16B of the optical fiber 15 are disposed at positions shifted from the center axis C15.

In the embodiment, as shown in FIG. 3, when the fiber end face 15a is viewed along the axial direction D1, the center C16B of the core 16B is disposed at a position shifted from an inclined direction line L4 when the inclined direction line L4 that passes through the center C16A of the core 16A and extends along the inclined direction D4 is drawn. That is, on the fiber end face 15a, the center C16B of the core 16B is disposed at a position shifted from the inclined direction line L4 when the inclined direction line (straight line) L4 that passes through the center C16A of the core 16A, is parallel to the inclined direction (inclined surface) D4, and is parallel to the cross section including the center axis C15 is drawn. The center C16B of the core 16B being shifted from the inclined direction line L4 means that, when the fiber end face 15a is viewed along the axial direction D1, the center C16B of the core 16B is disposed at a position away from the inclined direction line L4 without overlapping the inclined direction line L4.

Thus, when the fiber end face 15a is viewed along the axial direction D1, that is, on the fiber end face 15a, when a straight line L16 connecting the center C16A of the core 16A and the center C16B of the core 16B is drawn, the straight line L16 represented by a dotted line is not parallel to the inclined direction line L4, but intersects the inclined direction line L4. In the example shown in FIG. 3, the center C16B of the core 16B is disposed on a straight line L2 passing through the center C16A of the core 16A and extending along the longitudinal direction D2. In this case, the straight line L16 is perpendicular to the inclined direction line L4. The center C16B of the core 16B may be disposed at a position closer to the straight line L2 than to the inclined direction line L4 in a rotation direction about the center C16A of the core 16A as a center.

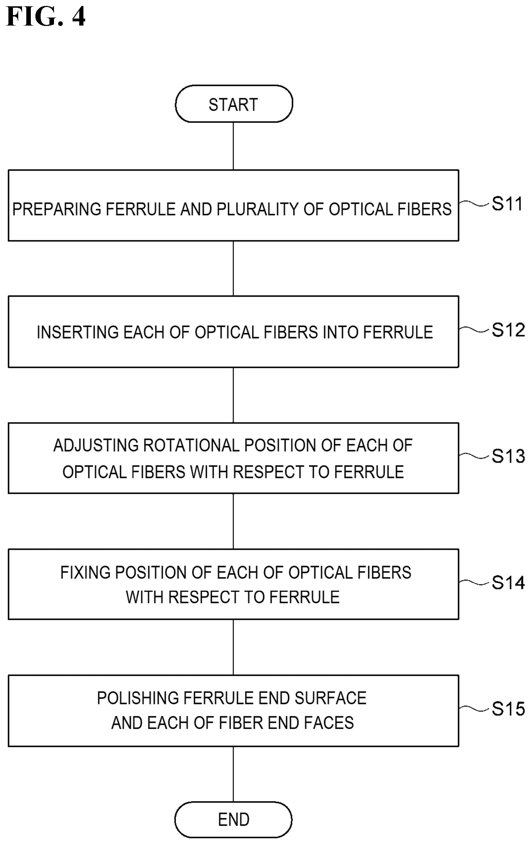

A method of manufacturing the optical connector 2 described above will be described with reference to FIG. 4. FIG. 4 is a flowchart showing a manufacturing process of the optical connector 2.

First, as shown in FIG. 4, the ferrule 5 and the plurality of optical fibers 15 are prepared (step S11). The ferrule 5 includes, for example, the plurality of through holes 7 extending from the ferrule end surface 5a along the axial direction D1 and arranged along the longitudinal direction D2. Each of the optical fibers 15 includes, for example, two cores 16A, 16B. The two cores 16A, 16B are arranged, for example, line-symmetrically with respect to the center axis C15.

Next, the optical fibers 15 are inserted into the ferrule 5 (step S12). For example, each of the optical fibers 15 is inserted into a respective one of the through holes 7 of the ferrule 5 along the axial direction D1, and the fiber end face 15a of each of the optical fibers 15 is exposed from the ferrule end surface 5a.

Next, a rotational position of each of the optical fibers 15 with respect to the ferrule 5 is adjusted (step S13). At this time, when the fiber end face 15a is viewed along the axial direction D1, that is, on the fiber end face 15a, the rotational position of each of the optical fibers 15 around the center axis C15 is determined such that the center C16B of the core 16B is disposed at a position shifted from the inclined direction line L4 when the inclined direction line (straight line) L4 that passes through the center C16A of the core 16A and extends along the inclined direction (inclined surface) D4 is drawn. As a result, when the fiber end face 15a is viewed along the axial direction D1, that is, on the fiber end face 15a, when the straight line L16 connecting the center C16A of the core 16A and the center C16B of the core 16B is drawn, a straight line L16A is not parallel to the inclined direction line L4, but intersects the inclined direction line L4.

Next, the position of each of the optical fibers 15 with respect to the ferrule 5 is fixed (step S14). For example, after the rotational position of each of the optical fibers 15 with respect to the ferrule 5 is determined, an adhesive is introduced into the ferrule 5. As the adhesive, for example, an adhesive having a high viscosity to the extent that the adhesive does not flow out from each of the through holes 7 inside the ferrule 5 to the ferrule end surface 5a is used. Each of the optical fibers 15 is fixed to the ferrule 5 by curing the adhesive inside the ferrule 5.

Next, the ferrule end surface 5a and each of the fiber end faces 15a are polished (step S15). After the rotational position of each of the optical fibers 15 with respect to the ferrule 5 is determined, the ferrule end surface 5a and the fiber end face 15a of each of the optical fibers 15 exposed from the ferrule end surface 5a are subjected to the angled polishing. As a result, the ferrule end surface 5a and each of the fiber end faces 15a are inclined with respect to the plane perpendicular to the axial direction D1. Specifically, as shown in FIG. 1, the ferrule end surface 5a and each of the fiber end faces 15a extend along the inclined direction (inclined surface) D4 inclined with respect to the lateral direction (plane) D3 perpendicular to the axial direction D1 in the cross section passing through the center axis C15 and extending along the lateral direction D3 and the axial direction D1. The optical connector 2 is obtained through the above processes.

Effects obtained by the optical connector 2, the optical connection assembly 1, the optical fiber 15, and the method of manufacturing the optical connector 2 according to the embodiment will be described together with a problem of a comparative example.

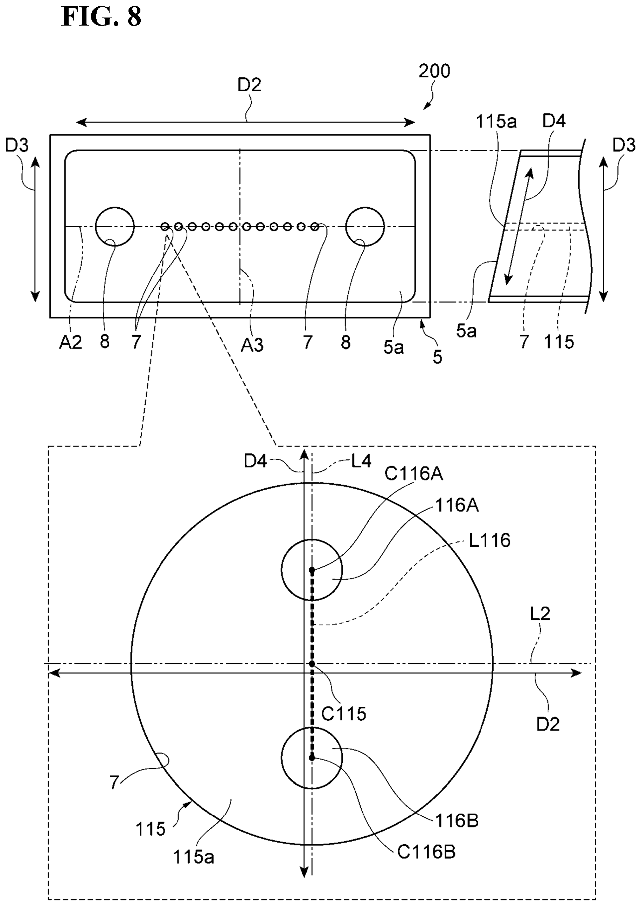

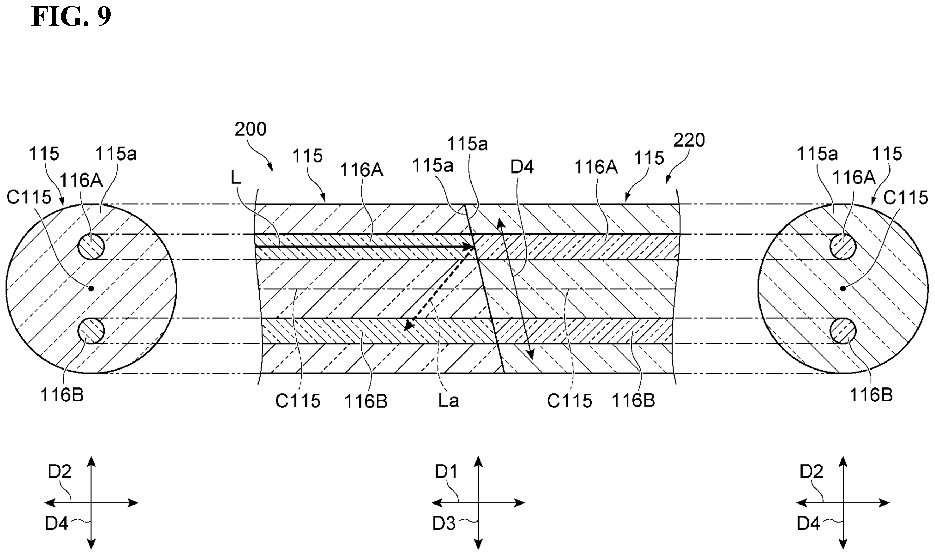

FIG. 8 is a front view showing an optical connector 200 according to a comparative example. FIG. 9 is a cross-sectional view for explaining a problem of the optical connector 200. As shown in FIG. 8, in the optical connector 200, centers C116A, C116B of cores 116A, 116B of the optical fiber 115 held by the ferrule 5 are disposed on the inclined direction line (straight line) L4. That is, a straight line L116 connecting the center C116A of the core 116A and the center C116B of the core 116B, which is represented by a dotted line in FIG. 8, is parallel to the inclined direction line L4.

As shown in FIG. 9, each of the ferrule end surface 5a of the optical connector 200 and the ferrule end surface 5a of a connection counterpart optical connector 220 is inclined with respect to a direction perpendicular to a center axis C115 of the optical fiber 115. In this case, in a state where the ferrule end surface 5a and the ferrule end surface 5a are butted against each other, an optical signal L propagated through the core 116A of the optical connector 200 is reflected at the inclined ferrule end surface 5a and travels in a reflection direction as a reflected return light La. The reflection direction in which the reflected return light La travels is along the inclined direction D4 when a fiber end face 115a is viewed along the axial direction D1. Thus, when the cores 116A, 116B are disposed so as to be arranged in the inclined direction D4 on the fiber end face 115a as in the optical connector 200, the reflected return light La may enter the core 116B because a core 116 is present at the destination of the reflected return light La. In this case, when the reflected return light La is coupled to the core 116B, the reflected return light La may deteriorate an optical signal propagating through the core 116B, and thus the quality of optical transmission between the optical connectors 200, 220 may deteriorate.

FIG. 9 shows a case where the optical signal L travels from the optical connector 200 toward the connection counterpart optical connector 220 (that is, a case where the optical signal L travels from left to right in FIG. 9). In this case, the reflected return light La is reflected in a direction from the upper core 116A to the lower core 116B in FIG. 9. It is also assumed that an optical signal travels from the connection counterpart optical connector 220 toward the optical connector 200 (that is, a case where the optical signal travels from right to left in FIG. 9). In this case, for example, the reflected return light of the optical signal propagating through the core 116B of the connection counterpart optical connector 220 may be reflected in a direction toward the core 116A of the optical connector 220. That is, the reflected return light may be reflected in a direction from the lower core 116B to the upper core 116A in FIG. 9. In this manner, assuming that the optical signal propagates in both directions between the optical connector 200 and the connection counterpart optical connector 220, the reflected return light may be reflected at both sides of the fiber end face 115a.

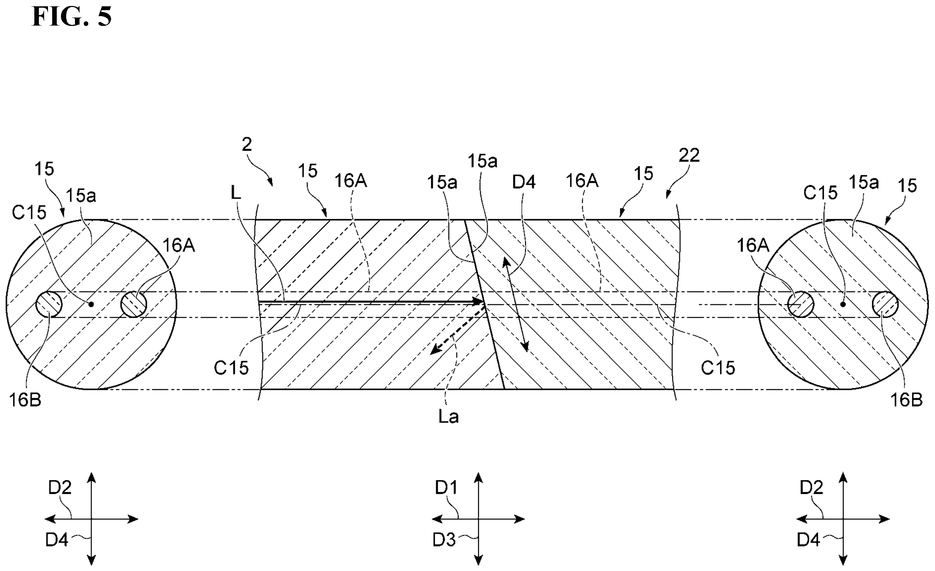

FIG. 5 is a cross-sectional view for explaining effects of the embodiment. In the embodiment, when the ferrule end surface 5a is viewed along the axial direction D1, the center C16B of the core 16B is disposed at a position shifted from the inclined direction line L4 when the inclined direction line L4 that passes through the center C16A of the core 16A and extends along the inclined direction D4 is drawn (see FIG. 3). That is, on the fiber end face 15a, the center C16B of the core 16B is disposed at a position shifted from the inclined direction line L4 when the inclined direction line (straight line) L4 that passes through the center C16A of the core 16A, is parallel to the inclined direction (inclined surface) D4, and is parallel to the cross section including the center axis C15 is drawn. That is, the cores 16A, 16B are disposed so as not to be arranged in the inclined direction D4 on the ferrule end surface 5a. As a result, as shown in FIG. 5, the core 16B can be disposed so that the core 16B is not present at the destination to which the reflected return light La travels, and thus incidence of the reflected return light La to the core 16B can be reduced. As a result, coupling of the reflected return light La to the core 16B can be reduced. That is, it is possible to reduce deterioration of an optical signal propagating through the core 16B due to an influence of the reflected return light La. Thus, according to the embodiment, it is possible to reduce deterioration in the quality of optical transmission between the optical connectors 2, 22.

As in the embodiment, the core 16B may be disposed at a position closest to the core 16A on the ferrule end surface 5a. In this manner, in a case where the core 16B is disposed close to the core 16A, when the reflected return light La is incident on the core 16B, the reflected return light La is likely to have a significant influence on the optical signal propagating through the core 16B and it is assumed that the optical signal is significantly deteriorated. In contrast, in the embodiment, since the incidence of the reflected return light La on the core 16B can be reduced as described above, the above-described effect can be achieved effectively.

As in the embodiment, the optical fiber 15 may be a multi-core fiber. In this case, since the core 16B is likely to be disposed at a position close to the core 16A, when the reflected return light La of the optical signal L propagating through the core 16A is incident on the core 16B, the influence of the reflected return light La on the optical signal propagating through the core 16B is likely to be large. In contrast, in the embodiment, since the incidence of the reflected return light La on the core 16B can be reduced as described above, the above-described effect can be achieved effectively.

As in the embodiment, the centers C16A, C16B of all the cores 16A, 16B may be disposed at positions shifted from the center axis C15. If any one of the cores is disposed on the center axis C15, the core disposed on the center axis C15 (hereinafter referred to as a "center core") is disposed at a position relatively close to the core disposed at a position shifted from the center axis C15 (hereinafter referred to as a "peripheral core"). Thus, for example, when a reflected return light of an optical signal propagating through the center core is incident on the peripheral core, it is assumed that an optical signal propagating through the peripheral core is significantly deteriorated due to the influence of the reflected return light. In the above configuration, since all the cores 16A, 16B are disposed at positions shifted from the center axis C15, the interval between the cores 16A, 16B can be maintained to some extent. Thus, even if the reflected return light of the optical signal propagating through any one of the cores is incident on another core, it is possible to reduce significant deterioration of the optical signal propagating through the core due to the influence of the reflected return light.

The optical connector, the optical connection assembly, the optical waveguide member, and the method of manufacturing the optical connector of the present disclosure are not limited to the above-described embodiments, and various other modifications are possible.

### <First Modification>

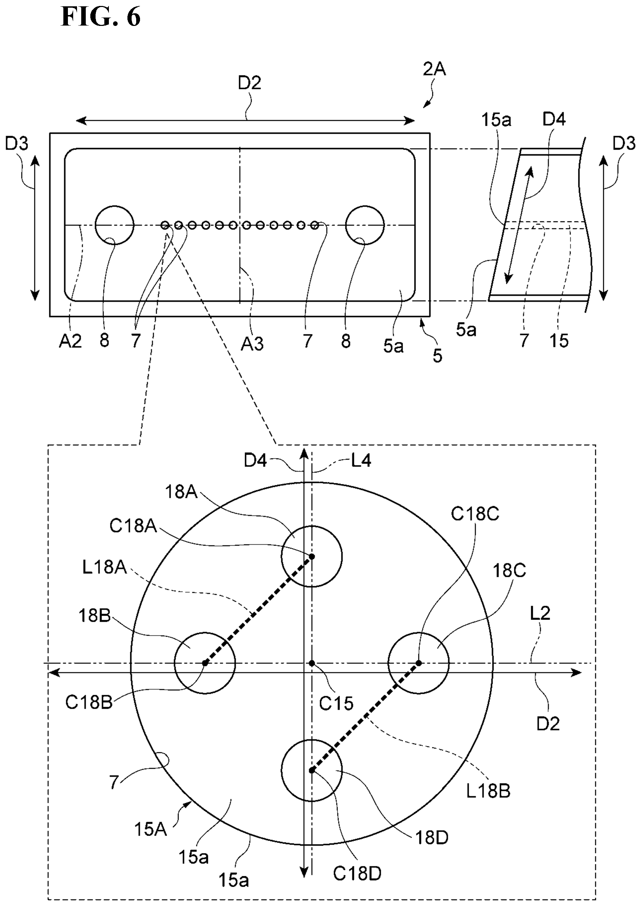

FIG. 6 is a front view showing an optical connector 2A according to a first modification. As shown in FIG. 6, the optical connector 2A includes an optical fiber 15A having four cores 18A, 18B, 18C, 18D. The cores 18A, 18B, 18C, 18D are disposed at positions shifted from the center axis C15 of the optical fiber 15A, and are arranged point-symmetrically with respect to the center axis C15, for example. The cores 18A, 18B, 18C, 18D are disposed at equal intervals around the center axis C15 on the fiber end face 15a. Thus, any two cores adjacent to each other among the cores 18A, 18B, 18C, 18D may be regarded as the "first refractive index changed region" and the "second refractive index changed region" disposed at positions closest to each other. Here, for convenience, the "core 18A" and the "core 18B" adjacent to each other among the cores 18A, 18B, 18C, 18D are respectively regarded as the "first refractive index changed region" and the "second refractive index changed region".

As shown in FIG. 6, when the fiber end face 15a is viewed along the axial direction D1, a center C18B of the core 18B is disposed at a position shifted from the inclined direction line L4 when the inclined direction line L4 that passes through a center C18A of the core 18A and extends along the inclined direction D4 is drawn. That is, on the fiber end face 15a, the center C18B of the core 18B is disposed at a position shifted from the inclined direction line L4 (straight line) when the inclined direction line L4 that passes through the center C18A of the core 18A, is parallel to the inclined direction (inclined surface) D4, and is parallel to the cross section including the center axis C15 is drawn. Thus, when the fiber end face 15a is viewed along the axial direction D1, that is, on the fiber end face 15a, when a straight line L18A connecting the center C18A of the core 18A and the center C18B of the core 18B is drawn, the straight line L18A represented by a dotted line is not parallel to the inclined direction line L4, but intersects the inclined direction line L4. The straight line L18A extends, for example, in a direction intersecting both the inclined direction D4 and the longitudinal direction D2.

Even when the "core 18C" and the "core 18D" adjacent to each other among the cores 18A, 18B, 18C, 18D are respectively regarded as the "first refractive index changed region" and the "second refractive index changed region", the arrangement relationship between the "core 18C" and the "core 18D" is similar to the arrangement relationship between the "core 18A" and the "core 18D" described above. That is, when the fiber end face 15a is viewed along the axial direction D1 and a straight line L18B connecting a center C18C of the core 18C and a center C18D of the core 18D is drawn, the straight line L18B represented by a dotted line is not parallel to the inclined direction line L4 and intersects the inclined direction line L4. When the fiber end face 15a is viewed along the axial direction D1, the straight line L18B extends in a direction intersecting both the inclined direction D4 and the longitudinal direction D2, similarly to the straight line L18A, for example.

Even in such a form, similar effects to those of the above-described embodiment can be obtained. That is, since the center C18B of the core 18B is disposed at a position shifted from the inclined direction line L4 passing through the center C18A of the core 18A, for example, incidence of a reflected return light of a signal light propagating through the core 18A on the core 18B adjacent to the core 18A can be reduced. This can reduce deterioration of an optical signal propagating through the core 18B due to the influence of the reflected return light. In the example shown in FIG. 6, the center C18D of the core 18D, which is disposed at a position farther from the core 18A than the core 18B, is disposed on the inclined direction line L4 that passes through the center C18A of the core 18A. Since a distance between the core 18A and the core 18D is sufficiently larger than a distance between the core 18A and the core 18B, even if the reflected return light of the signal light propagating through the core 18A enters the core 18D, the influence of a reflected return light on an optical signal propagating through the core 18D is negligibly small. Thus, even in the example shown in FIG. 6, it is possible to reduce deterioration in the quality of optical transmission, as in the above-described embodiment.

In the optical connector 2A, in addition to the center C18B of the core 18B, the center C18C of the core 18C may also be disposed at a position shifted from the inclined direction line L4 that passes through the center C18A of the core 18A. In this case, the centers C18B and C18C of the cores 18B and 18C are disposed at positions shifted from the inclined direction line L4. In this case, since the incidence of the reflected return light on the cores 18B and 18C can be reduced, deterioration in the quality of optical transmission due to the influence of the reflected return light can be more effectively reduced.

### <Second Modification>

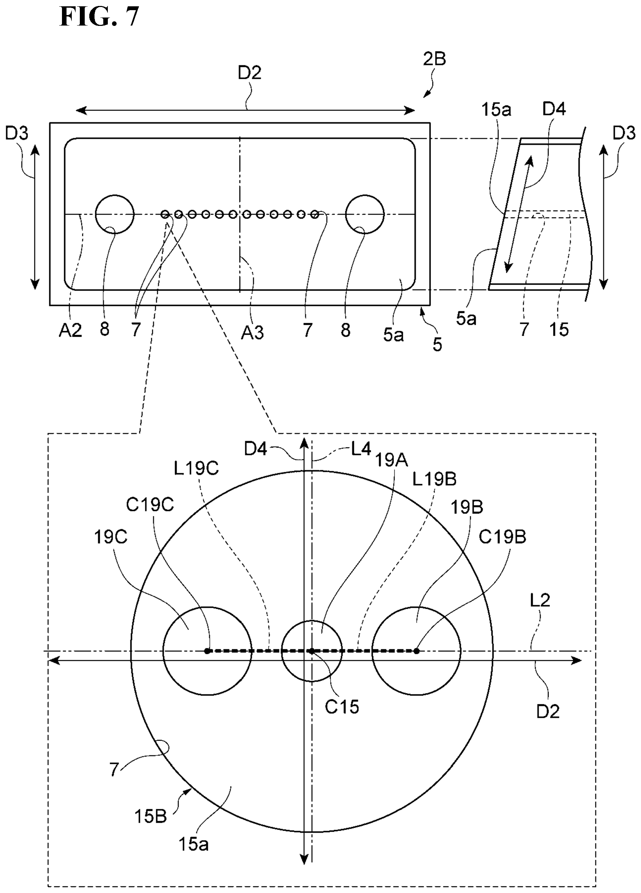

FIG. 7 is a front view showing an optical connector 2B according to a second modification. As shown in FIG. 7, the optical connector 2B includes an optical fiber 15B having one core 19A on the center axis C15. A refractive index of the core 19A is higher than a refractive index of the surrounding cladding 17. The optical fiber 15B is a polarization maintaining fiber and has a pair of stress application portions 19B, 19C at a pair of positions sandwiching the core 19A. Each of the stress application portions 19B, 19C is a refractive index changed region having a refractive index lower than the refractive index of the surrounding cladding 17.

The center of the core 19A is disposed on the center axis C15, and centers C19B, C19C of the stress application portions 19B, 19C are disposed at equal distances from the center axis C15. Thus, any two adjacent ones among the core 19A, the stress application portions 19B, 19C may be regarded as the "first refractive index changed region" and the "second refractive index changed region" that are disposed at positions closest to each other. Here, for convenience, the "core 19A" and the "stress application portion 19B" adjacent to each other are respectively regarded as the "first refractive index changed region" and the "second refractive index changed region".

As shown in FIG. 7, when the fiber end face 15a is viewed along the axial direction D1, that is, on the fiber end face 15a, the center C19B of the stress application portion 19B is disposed at a position shifted from the inclined direction line (straight line) L4 when the inclined direction line L4 that passes through the center axis C15 and extends along the inclined direction (inclined surface) D4 is drawn. Thus, when the fiber end face 15a is viewed along the axial direction D1, that is, on the fiber end face 15a, when a straight line L19B connecting the center axis C15 and the center C19B of the stress application portion 19B is drawn, the straight line L19B represented by a dotted line is not parallel to the inclined direction line L4, but intersects the inclined direction line L4. When the fiber end face 15a is viewed along the axial direction D1, the straight line L19B is disposed on the straight line L2 that passes through the center axis C15 and extends along the longitudinal direction D2, for example. In this case, the straight line L19B is perpendicular to the inclined direction line L4 and overlaps the straight line L2.

In the optical connector 2B, when the ferrule end surface 5a is viewed along the axial direction D1, the centers of all the refractive index changed regions (that is, the centers C19B, C19C of the stress application portions 19B, 19C) except the core 19A are disposed at positions shifted from the inclined direction line L4. Thus, when a straight line L19C connecting the center axis C15 and a center C19C of the stress application portion 19C is drawn, the straight line L19C represented by a dotted line is not parallel to the inclined direction line L4, but intersects the inclined direction line L4. The straight line L19C is disposed on, for example, the straight line L2, similarly to the straight line L19B. That is, the straight line L19C is perpendicular to the inclined direction line L4 and overlaps the straight line L2.

In the optical connector 2B, since the centers C19B, C19C of the stress application portions 19B, 19C are disposed at positions shifted from the inclined direction line L4, it is possible to reduce the reflected return light of the signal light propagating through the core 19A from being reflected at the stress application portions 19B, 19C and returning to the core 19A again. This can reduce deterioration of an optical signal propagating through the core 19A due to the influence of the reflected return light. This can effectively reduce deterioration in the quality of optical transmission of the optical connector 2B.

The present disclosure is susceptible to various other modifications. For example, the above-described embodiments and modifications may be combined with each other according to a desired purpose and effect. In the above-described embodiment, the "multi-core fiber" (optical fiber 15) is illustrated as an example of the "optical waveguide member". Instead of the multi-core fiber, a "bundle fiber" in which a plurality of single-core fibers are bundled may be used as the "optical waveguide member". In the above-described embodiment, the case where the cores of the optical fiber are arranged line-symmetrically or point-symmetrically with respect to the center axis has been described. The cores of the optical fiber may be arranged non-line-symmetrically or non-point-symmetrically with respect to the center axis. The optical fiber may have a center core disposed on the center axis in addition to the peripheral cores disposed at positions shifted from the center axis. In the above-described embodiment, the multi-fiber connector has been illustrated as an example, but the connector used for Angled PC connection is not limited to the multi-fiber connector. Even in the case of a single-core connector, when the center of the second refractive index changed region is disposed at a position shifted from the inclined direction line passing through the center of the first refractive index changed region, it is possible to reduce deterioration in the quality of optical transmission due to the influence of the reflected return light.

As can be understood from the description of the above embodiments, the present specification includes the disclosure of the following aspects.

### (Supplementary Note 1)

An optical connector including:
an optical connector ferrule including a ferrule end surface and at least one through hole extending from the ferrule end surface; and
at least one optical waveguide member including a distal end surface exposed from the ferrule end surface and a plurality of refractive index changed regions exposed from the distal end surface, each of the plurality of refractive index changed regions having a refractive index different from a refractive index of a cladding, the at least one optical waveguide member being held by the optical connector ferrule in a state of being inserted into the at least one through hole,
wherein the plurality of refractive index changed regions include at least one core,
wherein a first refractive index changed region and a second refractive index changed region among the plurality of refractive index changed regions are disposed adjacent to each other on the distal end surface,
wherein, in a cross section including a center axis of the at least one optical waveguide member, the ferrule end surface and the distal end surface are inclined along an inclined direction inclined from a direction perpendicular to the center axis, and
wherein, when the distal end surface is viewed in an axial direction in which the center axis extends, a center of the second refractive index changed region is disposed at a position shifted from an inclined direction line when the inclined direction line that passes through a center of the first refractive index changed region and extends along the inclined direction is drawn.

### REFERENCE SIGNS LIST

1 optical connection assembly
2, 2A, 2B optical connector (first optical connector)
5 ferrule (optical connector ferrule)
5a ferrule end surface
5b rear end surface
6 introduction opening
7 through hole
8 guiding hole
12 outer sheath
13 optical fiber core wire
15, 15A, 15B optical fiber (optical waveguide member)
15a fiber end face (distal end surface)
16A, 18A, 19A core (first refractive index changed region)
16B, 18B core (second refractive index changed region)
17 cladding
18C, 18D core
19B stress application portion (second refractive index changed region)
19C stress application portion
22 optical connector (second optical connector)
115 optical fiber
116, 116A, 116B core
200, 220 optical connector
A2 first center line (major axis)
A3 second center line (minor axis)
C15, C115 center axis
C16A, C16B, C18A, C18B, C18C, C18D, C19B, C19C, C116A, C116B center
D1 axial direction
D2 longitudinal direction
D3 lateral direction (plane perpendicular to center axis)
D4 inclined direction (inclined surface)
L optical signal
L2 straight line
L4 inclined direction line (straight line)
L16, L16A, L18A, L18B, L19B, L19C, L116 straight line
La reflected return light

## Claims

1. An optical connector comprising:
an optical connector ferrule including a ferrule end surface and at least one through hole extending from the ferrule end surface; and
an optical waveguide member including a distal end surface exposed at the ferrule end surface, a plurality of refractive index changed regions exposed at the distal end surface, and a cladding surrounding the plurality of refractive index changed regions, the optical waveguide member being held by the optical connector ferrule in a state of being inserted into the at least one through hole,
wherein each of the plurality of refractive index changed regions has a refractive index different from a refractive index of the cladding,
wherein the plurality of refractive index changed regions include a first refractive index changed region and a second refractive index changed region, at least one of the first refractive index changed region or the second refractive index changed region being a core,
wherein, in a cross section including a center axis of the optical waveguide member, the ferrule end surface and the distal end surface are inclined in parallel to an inclined surface inclined with respect to a plane perpendicular to the center axis, and
wherein, on the distal end surface, a center of the second refractive index changed region is disposed at a position shifted from a straight line when the straight line that passes through a center of the first refractive index changed region, is parallel to the inclined surface, and is parallel to the cross section is drawn.

2. The optical connector according to claim 1,
wherein the second refractive index changed region is disposed at a position closest to the first refractive index changed region on the distal end surface among the plurality of refractive index changed regions.

3. The optical connector according to claim 1 or 2,
wherein, on the distal end surface, centers of all of the plurality of refractive index changed regions except the first refractive index changed region are disposed at positions shifted from the straight line.

4. The optical connector according to any one of claims 1 to 3,
wherein the optical waveguide member is a multi-core fiber, and
wherein each of the first refractive index changed region and the second refractive index changed region is the core.

5. The optical connector according to claim 4,
wherein centers of all of the plurality of refractive index changed regions are disposed at positions shifted from the center axis.

6. The optical connector according to any one of claims 1 to 3,
wherein the optical waveguide member is a polarization maintaining fiber,
wherein when the first refractive index changed region is the core, the second refractive index changed region is a stress application portion, and
wherein when the second refractive index changed region is the core, the first refractive index changed region is the stress application portion.

7. An optical connection assembly comprising:
a first optical connector and a second optical connector, each being the optical connector according to any one of claims 1 to 6,
wherein the ferrule end surface of the first optical connector faces the ferrule end surface of the second optical connector along the center axis.

8. An optical waveguide member comprising:
a distal end surface; and
a plurality of refractive index changed regions exposed at the distal end surface, and a cladding surrounding the plurality of refractive index changed regions,
wherein each of the plurality of refractive index changed regions has a refractive index different from a refractive index of the cladding,
wherein the plurality of refractive index changed regions include a first refractive index changed region and a second refractive index changed region, at least one of the first refractive index changed region or the second refractive index changed region being a core,
wherein, in a cross section including a center axis extending along the core from a center of the distal end surface, the distal end surface is inclined in parallel to an inclined surface inclined with respect to a plane perpendicular to the center axis, and
wherein, on the distal end surface, a center of the second refractive index changed region is disposed at a position shifted from a straight line when the straight line that passes through a center of the first refractive index changed region, is parallel to the inclined surface, and is parallel to the cross section is drawn.

9. A method of manufacturing an optical connector, comprising:
preparing an optical connector ferrule including a ferrule end surface and at least one through hole extending from the ferrule end surface, and preparing an optical waveguide member including a distal end surface, a plurality of refractive index changed regions exposed at the distal end surface, and a cladding surrounding the plurality of refractive index changed regions;
inserting the optical waveguide member into the at least one through hole such that the distal end surface is exposed from the ferrule end surface;
adjusting a rotational position of the optical waveguide member around a center axis of the optical waveguide member; and
after the rotational position of the optical waveguide member is determined, polishing the ferrule end surface and the distal end surface such that the ferrule end surface and the distal end surface are parallel to an inclined surface inclined with respect to a plane perpendicular to the center axis of the optical waveguide member in a cross section including the center axis,
wherein each of the plurality of refractive index changed regions has a refractive index different from a refractive index of the cladding,
wherein the plurality of refractive index changed regions include a first refractive index changed region and a second refractive index changed region, at least one of the first refractive index changed region or the second refractive index changed region being a core, and
wherein, in the adjusting the rotational position of the optical waveguide member, on the distal end surface, the rotational position of the optical waveguide member around the center axis is determined such that a center of the second refractive index changed region is disposed at a position shifted from a straight line when the straight line that passes through a center of the first refractive index changed region, is parallel to the inclined surface, and is parallel to the cross section is drawn.
